# EUROPEAN PATENT SPECIFICATION

(11) **EP 3 799 590 B1**
(45) Date of publication and mention of the grant of the patent: **20.03.2024**
(21) Application number: 19834326.1
(22) Date of filing: 18.01.2019
(51) Int. Cl.: B62D 35/00

(54) **DRAG REDUCING ADD-ON DEVICE FOR SIDE WALLS OF LARGE COMMERCIAL VEHICLES**
LUFTWIDERSTANDSREDUZIERENDE ZUSATZVORRICHTUNG FÜR SEITENWÄNDE VON GROSSEN NUTZFAHRZEUGEN
DISPOSITIF COMPLÉMENTAIRE DE RÉDUCTION DE RÉSISTANCE À L'AVANCEMENT POUR PAROIS LATÉRALES DE GRANDS VÉHICULES UTILITAIRES

(30) Priority: 09.07.2018 TR 201809760
(43) Date of publication of application: 07.04.2021
(73) Proprietor: Anadolu Universitesi, Tepebasi/Eskisehir (TR)
(72) Inventor: INSEL, Canberk, Odunpazari/Eskisehir (TR); CELIK, Ahmet Ozan, Tepebasi/Eskisehir (TR)
(74) Representative: Sevinç, Cenk
(86) International application number: PCT/TR2019/050040
(87) International publication number: WO 2020/013773

(56) References cited:
- EP-A1- 3 284 662
- WO-A2-2013/106120
- DE-A1-102012 010 002
- US-A1- 2003 205 913
- US-A1- 2005 040 669
- US-A1- 2005 206 196
- US-A1- 2016 280 287
- US-B1- 6 224 141
- US-B1- 6 286 894
- US-B1- 8 870 275
- US-B1- 9 333 995
- US-B2- 8 616 616
- TAHA, ZAHARI et al.: "CFD Analysis for Merdeka 2 Solar Vehicle", Advanced Science Letters, vol. 4, 2011, pages 2807-2811, XP055675262,

## Description

### Field of the Invention

The present invention relates to aerodynamic add-on devices that enable to reduce air resistance.

### Background of the Invention

When the vehicles move, a force is exerted by air (air resistance) on the vehicles resulting from friction in a direction opposite to the movement of the vehicle. In order to reduce the air resistance, in the prior art, for example in large commercial vehicles, gaps are closed, masks such as airfoil cross-section or teardrop parts are added to the upper part of the vehicle, streamlining is provided at the front of the vehicle and fairings are arranged to offset vortices at the rear part of the vehicle. The United States patent document no. US8870275B1, an application in the state of the art, discloses reducing aerodynamic drag by means of interconnected tubings attached to the side and roof of the vehicle, venturis located between the intake and outtake ports of the said tubings, and a compressed air source arranged on the intake port of the tubings. US 8616616 discloses the preamble of claim 1.

The disadvantages of the aerodynamic apparatuses in the state of the art are that the physical sizes thereof are too large, their masses are too much (200 kg and more), their assembly is difficult, their costs are high, and their cost/benefit ratios are low.

### Problems Solved by the Invention

It is an object of the present invention to provide a lightweight and durable aerodynamic insert having easy-to-install foam, polymer or composite profile(s) which provides a reduction in drag force of the vehicle and thus fuel savings. In the preliminary studies performed on a representative truck trailer, the aerodynamic add-on device of the present invention has improved the Cd (drag) coefficient by 6 to 10% and thus provided fuel saving in the range of 3.6 to 6%.

In the present invention, with the help of the aerodynamic add-on device, significant fuel savings are obtained from the side parts which are almost never utilized in large commercial vehicles, and heavy, costly and difficult-to-mount parts are not used in this process. Utilizing the side region can also be used for side lighting via luminescent paint or electrical connection.

The aerodynamic add-on device of the invention is a device which will be applied in the form of an adjunct on the side and upper areas of the trailer/bus for rigid or tarpaulin truck trailers and coaches, and which will manipulate the air flow for purposes of reducing the drag in these areas. Geometry of this add-on is achieved as a result of an optimization (design and analysis).

The aerodynamic add-on device of the present invention can be designed in accordance with the current vehicle geometries. For this purpose, the length of the aerodynamic add-on device is as long as the length of the side region of the trailer/bus, and the height thereof is within the limits of the regulations and can be optimized with CFD (Computational Fluid Dynamics) model after trying different values for for practicality. The product can be installed by double sided epoxy based adhesives (or equivalents) which are resistant to external environment and water; or a screwing system. Other aspects which shall be optimized are the number of add-on devices on each side, and the curvatures of the bars along the sides because when the highway speeds are considered, very small geometry changes on the surface of the vehicle may cause substantial changes with both positive and negative effects. In this respect, the range of the patterns which can be useful can be determined by creating a large design pool and passing to the industrial design process with the method of parametric elimination from this pool. Here, the purpose is to determine the configurations wherein the add-on devices are most useful but fewest in number.

In general, the regions studied and the commercially available aerodynamic add-ons are collected in three main regions, namely front, bottom and rear. The improvements suggested in this invention are developed for the vehicle side surface which was not examined before. This difference also causes differences in the working angle of the aerodynamic add-on device according to the current direction, because the current add-on devices work with the principle of drawing the current away from the vehicle or trapping the air package under the vehicle. However, the air current acting on the current add-on devices at 45-90 degree angles brings along mounting problems that will structurally resist the resistance of this current (and the turbulent dynamic forces in this resistance). This can naturally cause to take cost-increasing measures.

Reduction of the total air resistance acting on the vehicle can also be realized by offsetting the vortices at the rear part. This method can only be implemented by an advanced fluids mechanics knowledge and analyzing power. The suggested add-on devices will work in parallel with and direct the air flow instead of resisting and drawing the flow away and thus will enable to set further back the rear vortices. For this reason, the add-on device itself is not subjected to very high and turbulent dynamic forces.

The aerodynamic add-on device of the present invention is for the commercial vehicles moving at freeway speeds (90 km/h) most of the time rather than vehicles moving within the city at slow speeds.

### Detailed Description of the Invention

An add-on device developed to fulfill the objectives of the present invention is illustrated in the accompanying figures, in which:

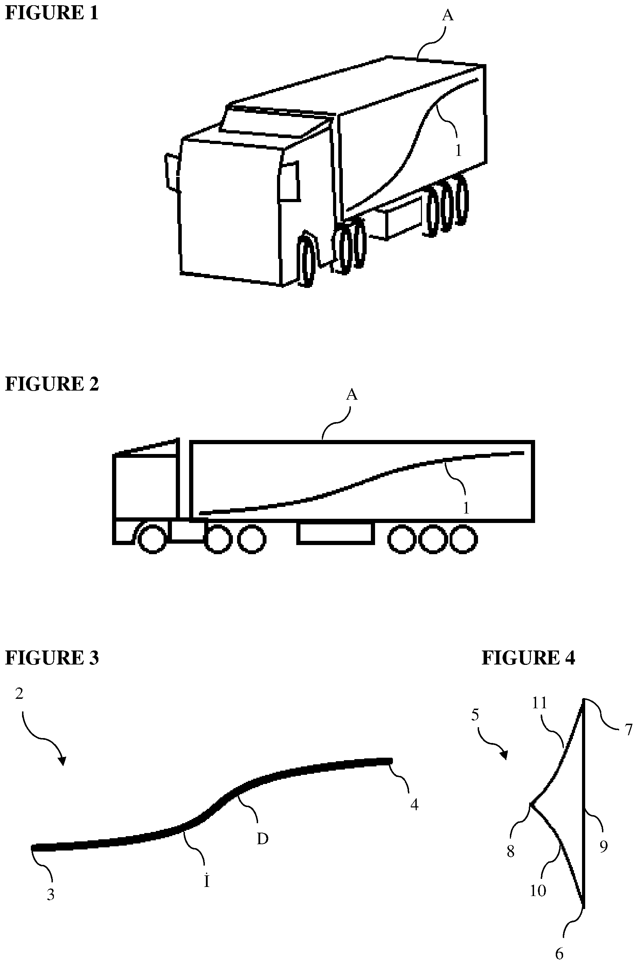

- **Figure 1.**: is a perspective of a vehicle on which the add-on device of the invention is located.
- **Figure 2.**: is a side view of the vehicle shown in Figure 1.
- **Figure 3.**: is a side view of the aerodynamic add-on.
- **Figure 4.**: is a sectional view of the aerodynamic add-on having the form of a dune shown in Figure 3.

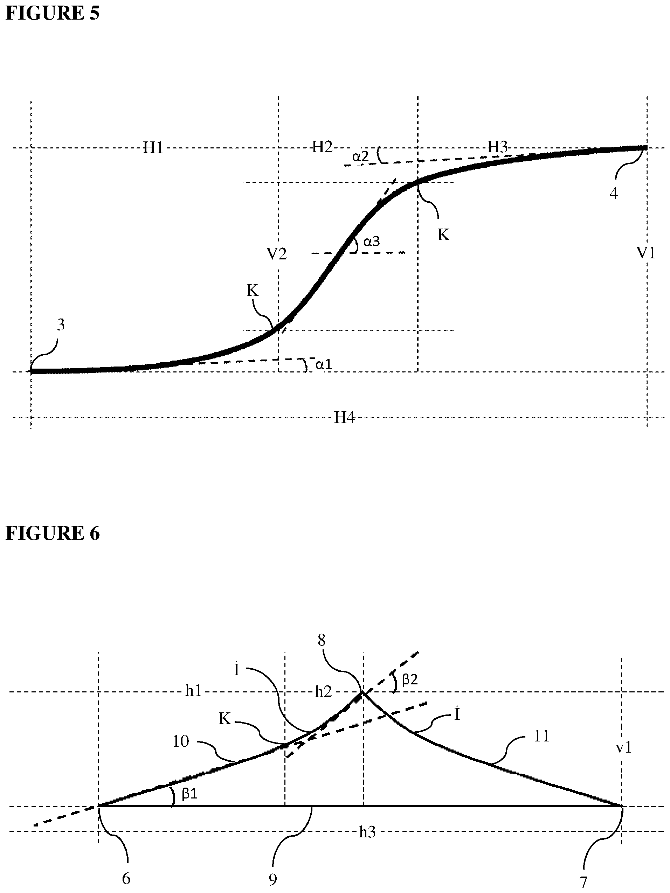

- **Figure 5.**: is a side view of the aerodynamic add-on wherein the profile sizes are shown.
- **Figure 6.**: is a sectional view of the aerodynamic add-on having the form of a dune wherein the section sizes are shown.

The components in the figures are given reference numbers as follows:
**1.** Aerodynamic add-on device
**2.** Profile
**3.** First profile end
**4.** Second profile end
**5.** Dune form
**6.** First section end
**7.** Second section end
**8.** Third section end
**9.** Base
**10.** First side surface
**11.** Second side surface
**A.** Vehicle
**i.** Concave curve
**D.** Convex curve
**K.** Breaking point
**H1.** First profile horizontal length
**H2.** Second profile horizontal length
**H3.** Third profile horizontal length
**H4.** Fourth profile horizontal length
**V1.** First profile vertical length
**V2.** Second profile vertical length
**α1.** First profile angle
**2.** Second profile angle
**α3.** Third profile angle
**h1.** First section length
**h2.** Second section length
**h3.** Third section length
**v1.** Section height
**β1.** First section angle
**β2.** Second section angle

The aerodynamic add-on device (1) of the present invention, which reduces the air resistance for the side walls of the large commercial vehicles (A), basically comprises a profile (2) which has a first profile end (3) and a second profile end (4), is in the form of an "S" having a concave curve (I) and a convex curve (D) between the first profile end (3) and the second profile end (4), and has a section in the form of a dune (5).

In one embodiment of the invention, the said profile (2) is made of a single piece. In another embodiment of the invention, the said profile (2) is comprised of a plurality of pieces which give the same form when connected.

The said dune form (5) comprises a first section end (6), a second section end (7) and a third section end (8). A base (9) extends between the first section end (6) and the second section end (7). The said base (9) is the surface of the profile (2) that will be adhered to the side surfaces of the vehicles (A). A first side surface (10) extends between the first section end (6) and the third section end (8); and a second side surface (11) extends between the second section end (7) and the third section end (8). A concave curve (I) is located on each of the first side surface (10) and the second side surface (11).

In a preferred embodiment of the invention, the aerodynamic add-on device (1) is produced from a lightweight (approximately 5-8 kg), durable, easy-to-mount polymer or composite material. Production of the said aerodynamic add-on device (1) can be realized as a composite material by means of plastic/aluminum extrusion (with moving head) or the method of laying up fabric into molds. The aerodynamic add-on device (1) can be mounted to the side surface of the vehicles (A) by means of epoxy based adhesives or derivatives thereof.

In a preferred embodiment of the invention, the horizontal distance between the two ends of the profile (2) is maximum as much as the side body length of the vehicle (A) (e.g. 5 - 20 meters). The height of the profile (2) (the height of its outwards projection from the side), in other words the height between the base (9) of the dune form (5) and the third section end (8) can be selected as 2-8 cm, provided that it does not exceed the limits specified by the regulations, and the base (9) width of the profile (2) can be selected as 4-20 cm.

The air resistance reduction performance of the aerodynamic add-on device (1) of the present invention depends on the place and angle of the breaking regions of the "S" profile (2) and the shape of the profile (2) section, and these ranges are given below. The profile of the aerodynamic add-on device (1) can be symmetrical or asymmetrical (disproportionate).

In a preferred embodiment of the present invention, the horizontal distance between the first profile end (3) and the breaking point (K) of the concave curve (I) is 2-7 m, the horizontal distance between the breaking points (K) of the concave curve (I) and the convex curve (D) is 1-6 m, the horizontal distance between the breaking point (K) of the convex curve (D) and the second profile end (4) is 2-7 m, the horizontal distance between the two ends of the profile (2) is 5-20 m (or as much as the side wall surface of the vehicle (A)), the vertical distance between the two ends of the profile (2) is 2-5 m, the vertical distance between the breaking points (K) of the concave curve (I) and the convex curve (D) is 1-3 m. The angle of the first profile end (3) with respect to the horizontal axis can be selected in the range of 5-25°; the angle of the second profile end (4) with respect to the horizontal axis can be selected in the range of 5-25°; and the angle of the profile (2) extending between the concave curve (1) and the convex curve (2) with respect to the horizontal axis can be selected in the range of 15-75°. The said lengths are summarized in Table 2 given below.

**Table 1. Profile longitudinal measurements**

| H1 | H2 | H3 | H4 | V1 | V2 | α1 | α2 | α3 |
|---|---|---|---|---|---|---|---|---|
| 2-7 m | 1-6 m | 2-7 m | 5-20 m | 2-5 m | 1-3 m | 5-25° | 5-25° | 15-75° |

In a preferred embodiment of the present invention, the horizontal distance between the first breaking point (K) on the first side surface (10) provided on the dune form (5) and the first section end (6) can be selected in the range of 1-5 cm, the horizontal distance between the said breaking point (K) and the third section end (8) can be selected in the range of 1-5 cm, the horizontal distance between the first section end (6) and the second section end (7) (in other words, the length of the base (9)) can be selected in the range of 4-20 cm, and the vertical distance between the base (9) and the third section end (8) can be selected in the range of 2-8 cm. The angle of the first side surface (10) extending from the first section end (6) with respect to the horizontal axis can be selected as 5-35° and the angle of a virtual line tangent to the peak of the concave curve (I) on the first side surface (10) with respect to the horizontal axis can be selected as 10-60°.

**Table 2. Profile section measurements**

| h1 | h2 | h3 | v1 | β1 | β2 |
|---|---|---|---|---|---|
| 1-5 cm | 1-5 cm | 4-20 cm | 2-8 cm | 5-35° | 10-60° |

6 to 10% or more reduction is attained in the drag force of the vehicle (A) according to the sizes of the said profile (2) and thus a fuel saving in the range of 3.6 to 6% is achieved.

## Claims

1. An aerodynamic add-on device (1) for application on the side walls of large commercial vehicles (A) to reduce air resistance, comprising
• a profile (2) which has a first end (3) and a second end (4) and having a cross-section in the form of a dune (5), **characterised in that** said profile is in the form of an "S" having a concave curve (I) and a convex curve (D) between the first profile end (3) and the second profile end (4).

2. Aerodynamic add-on device (1) according to Claim 1, **characterized by** comprising; the profile (2) which is produced from a single piece.

3. Aerodynamic add-on device (1) according to Claim 1, **characterized by** comprising; the profile (2) which is comprised of a plurality of pieces which give the same form when connected.

4. Aerodynamic add-on device (1) according to Claim 1, **characterized by** comprising; the profile (2) having a dune form (5) cross-section comprising a first section end (6); a second section end (7); a third section end (8); a base (9) extending between the first section end (6) and the second section end (7); a first side surface (10) extending between the first section end (6) and the third section end (8); a second side surface (11) extending between the second section end (7) and the third section end (8); and a concave curve (I) located on each of the first side surface (10) and the second side surface (11).

5. Aerodynamic add-on device (1) according to Claim 3, **characterized by** comprising; the profile (2) wherein the distance between the first profile end (3) and the second profile end (4) is 5-20 m, the height between the base (9) and the third section end (8) is 2-8 cm and the base (9) width is 4-20 cm.

6. Aerodynamic add-on device (1) according to Claim 1, **characterized by** comprising; the profile (2) wherein the horizontal distance between the first profile end (3) and the breaking point (K) of the concave curve (I) is 2-7 m, the horizontal distance between the breaking points (K) of the concave curve (I) and the convex curve (D) is 1-6 m, the horizontal distance between the breaking point (K) of the convex curve (D) and the second profile end (4) is 2-7 m, the horizontal distance between the two ends of the profile (2) is 5-20 m, the vertical distance between the two ends of the profile (2) is 2-5 m, the vertical distance between the breaking points (K) of the concave curve (I) and the convex curve (D) is 1-3 m.

7. Aerodynamic add-on device (1) according to Claim 1 or 6, **characterized by** comprising the profile (2) wherein the angle of the first profile end (3) with respect to the horizontal axis is in the range of 5-25°; the angle of the second profile end (4) with respect to the horizontal axis is in the range of 5-25°; and the angle of the profile (2) extending between the concave curve (1) and the convex curve (2) with respect to the horizontal axis is in the range of 15-75°.

8. Aerodynamic add-on device (1) according to Claim 3, **characterized by** comprising; the profile (2) having a dune form (5) cross-section wherein the horizontal distance between the first breaking point (K) on the first side surface (10) and the first section end (6) is in the range of 1-5 cm, the horizontal distance between the said breaking point (K) and the third section end (8) is in the range of 1-5 cm, the horizontal distance between the first section end (6) and the second section end (7) is in the range of 4-20 cm, and the vertical distance between the base (9) and the third section end (8) is in the range of 2-8 cm.

9. Aerodynamic add-on device (1) according to Claim 3 or 8, **characterized by** comprising; the profile (2) having a dune form (5) cross-section wherein the angle of the first side surface (10) extending from the first section end (6) with respect to the horizontal axis is in the range of 5-35° and the angle of a virtual line tangent to the peak of the concave curve (I) on the first side surface (10) with respect to the horizontal axis is in the range of 10-60°.

10. An aerodynamic add-on device (1) according to Claim 1, **characterized by** comprising; the profile (2) which is made of a plastic or composite material.

## Patentansprüche

1. Aerodynamische Zusatzeinrichtung (1) zur Anbringung an den Seitenwänden von großen Nutzfahrzeugen (A) zur Verringerung des Luftwiderstandes,
Nutzfahrzeugen (A) zur Verringerung des Luftwiderstandes,
• mit einem Profil (2), das ein erstes Ende (3) und ein zweites Ende (4) aufweist und einen Querschnitt in Form einer Düne (5) hat, **dadurch gekennzeichnet,**
**dass** das Profil die Form eines "S" mit einer konkaven Kurve (I) und einer konvexen Kurve (D) zwischen dem ersten Profilende (3) und dem zweiten Profilende (4) aufweist.

2. Aerodynamische Zusatzeinrichtung (1) nach Anspruch 1, **dadurch gekennzeichnet, dass** sie das Profil (2) umfasst, das aus einem einzigen Stück hergestellt ist.

3. Aerodynamische Zusatzeinrichtung (1) nach Anspruch 1, **dadurch gekennzeichnet, dass** sie folgendes umfasst: das Profil (2), das aus einer Vielzahl von Teilen besteht, die, wenn sie verbunden sind, die gleiche Form ergeben.

4. Aerodynamische Zusatzeinrichtung (1) nach Anspruch 1, **dadurch gekennzeichnet, dass** das Profil (2) einen dünenförmigen (5) Querschnitt aufweist, der ein erstes Abschnittsende (6); ein zweites Abschnittsende (7); ein drittes Abschnittsende (8); eine Basis (9), die sich zwischen dem ersten Abschnittsende (6) und dem zweiten Abschnittsende (7) erstreckt eine erste Seitenfläche (10), die sich zwischen dem ersten Abschnittsende (6) und dem dritten Abschnittsende (8) erstreckt; eine zweite Seitenfläche (11), die sich zwischen dem zweiten Abschnittsende (7) und dem dritten Abschnittsende (8) erstreckt; und eine konkave Kurve (I), die sich auf jeder der ersten Seitenfläche (10) und der zweiten Seitenfläche (11) befindet.

5. Aerodynamische Zusatzeinrichtung (1) nach Anspruch 3, **dadurch gekennzeichnet, dass** sie das Profil (2) umfasst, wobei der Abstand zwischen dem ersten Profilende (3) und dem zweiten Profilende (4) 5-20 m beträgt, die Höhe zwischen der Basis (9) und dem dritten Profilende (8) 2-8 cm beträgt und die Breite der Basis (9) 4-20 cm beträgt.

6. Aerodynamische Zusatzeinrichtung (1) nach Anspruch 1, **dadurch gekennzeichnet, dass** sie umfasst; das Profil (2), wobei der horizontale Abstand zwischen dem ersten Profilende (3) und der Sollbruchstelle (K) der konkaven Kurve (I) 2-7 m beträgt, der horizontale Abstand zwischen den Sollbruchstellen (K) der konkaven Kurve (I) und der konvexen Kurve (D) 1-6 m beträgt, der horizontale Abstand zwischen der Sollbruchstelle (K) der konvexen Kurve (D) und dem zweiten Profilende (4) 2-7 m beträgt, der horizontale Abstand zwischen den beiden Enden des Profils (2) beträgt 5-20 m, der vertikale Abstand zwischen den beiden Enden des Profils (2) beträgt 2-5 m, der vertikale Abstand zwischen den Bruchstellen (K) der konkaven Kurve (I) und der konvexen Kurve (D) beträgt 1-3 m.

7. Aerodynamische Zusatzeinrichtung (1) nach Anspruch 1 oder 6, **dadurch gekennzeichnet, dass** sie das Profil (2) umfasst, wobei der Winkel des ersten Profilendes (3) in Bezug auf die horizontale Achse im Bereich von 5-25° liegt; der Winkel des zweiten Profilendes (4) in Bezug auf die horizontale Achse im Bereich von 5-25° liegt; und der Winkel des Profils (2), der sich zwischen der konkaven Kurve (1) und der konvexen Kurve (2) erstreckt, in Bezug auf die horizontale Achse im Bereich von 15-75° liegt.

8. Aerodynamische Zusatzeinrichtung (1) nach Anspruch 3, **dadurch gekennzeichnet, dass** sie umfasst; das Profil (2) einen dünenförmigen (5) Querschnitt aufweist,
wobei der horizontale Abstand zwischen der ersten Sollbruchstelle (K) auf der ersten Seitenfläche (10) und dem ersten Profilende (6) im Bereich von 1-5 cm liegt, der horizontale Abstand zwischen der Sollbruchstelle (K) und dem dritten Profilende (8) im Bereich von 1-5 cm liegt, der horizontale Abstand zwischen dem ersten Profilende (6) und dem zweiten Profilende (7) im Bereich von 4-20 cm liegt, und der vertikale Abstand zwischen der Basis (9) und dem dritten Profilende (8) im Bereich von 2-8 cm liegt.

9. Aerodynamische Zusatzeinrichtung (1) nach Anspruch 3 oder 8, **dadurch gekennzeichnet, dass** das Profil (2) einen Querschnitt in Form einer Düne (5) aufweist, wobei der Winkel der ersten Seitenfläche (10), die sich vom ersten Profilende (6) aus erstreckt, in Bezug auf die horizontale Achse im Bereich von 5-35° liegt und der Winkel einer virtuellen Linie, die die Spitze der konkaven Kurve (I) auf der ersten Seitenfläche (10) tangiert, in Bezug auf die horizontale Achse im Bereich von 10-60° liegt.

10. Aerodynamische Zusatzeinrichtung (1) nach Anspruch 1, **dadurch gekennzeichnet, dass** das Profil (2) aus einem Kunststoff- oder Verbundmaterial besteht.

## Revendications

1. Dispositif aérodynamique complémentaire (1) destiné à être appliqué sur les parois latérales de grands véhicules utilitaires (A) afin de réduire la résistance de l'air, comprenant
• un profil (2) qui présente une première extrémité (3) et une seconde extrémité (4) et qui a une section transversale en forme de dune (5), **caractérisé en ce que** ledit profil
se trouve sous la forme d'un "S" ayant une courbe concave (I) et une courbe convexe (D) entre la première extrémité du profil (3) et la deuxième extrémité du profil (4).

2. Dispositif aérodynamique complémentaire (1) selon la Revendication 1, **caractérisé en ce qu'**il comprend; le profil (2) qui est réalisé d'une seule pièce.

3. Dispositif aérodynamique complémentaire (1) selon la revendication 1, **caractérisé en ce qu'**il comprend; le profil (2) qui est composé d'une pluralité de pièces qui donnent la même forme une fois reliées.

4. Dispositif aérodynamique complémentaire (1) selon la revendication 1, **caractérisé en ce qu'**il comprend: le profil (2) ayant une section transversale en forme de dune (5) comprenant une première extrémité de section (6); une deuxième extrémité de section (7); une troisième extrémité de section (8); une base (9) s'étendant entre la première extrémité de section (6) et la seconde extrémité de section (7); une première surface latérale (10) s'étendant entre la première extrémité de section (6) et la troisième extrémité de section (8); une deuxième surface latérale (11) s'étendant entre la deuxième extrémité de section (7) et la troisième extrémité de section (8); et une courbe concave (I) située sur chacune de la première surface latérale (10) et de la seconde surface latérale (11).

5. Dispositif aérodynamique complémentaire (1) selon la revendication 3, **caractérisé en ce qu'**il comprend: le profil (2) dans lequel la distance entre la première extrémité du profil (3) et la deuxième extrémité du profil (4) est de 5 à 20 m, la hauteur entre la base (9) et la troisième extrémité de section (8) est de 2 à 8 cm et la largeur de la base (9) est de 4 à 20 cm.

6. Dispositif aérodynamique complémentaire (1) selon la revendication 1, **caractérisé en ce qu'**il comprend: le profil (2) dans lequel la distance horizontale entre la première extrémité du profil (3) et le point de rupture (K) de la courbe concave (I) est de 2 à 7 m, la distance horizontale entre les points de rupture (K) de la courbe concave (I) et la courbe convexe (D) est de 1 à 6 m, la distance horizontale entre le point de rupture (K) de la courbe convexe (D) et la deuxième extrémité du profil (4) est de 2 à 7 m, la distance horizontale la distance entre les deux extrémités du profil (2) est de 5 à 20 m, la distance verticale entre les deux extrémités du profil (2) est de 2 à 5 m, la distance verticale entre les points de rupture (K) de la courbe concave (I) et la courbe convexe (D) est de 1 à 3 m.

7. Dispositif aérodynamique complémentaire (1) selon la revendication 1 ou 6, **caractérisé en ce qu'**il comprend le profil (2) dans lequel l'angle de la première extrémité du profil (3) par rapport à l'axe horizontal est compris dans la plage de 5 à 25°; l'angle de la seconde extrémité de profil (4) par rapport à l'axe horizontal est compris dans la plage de 5 à 25°; et l'angle du profil (2) s'étendant entre la courbe concave (1) et la courbe convexe (2) par rapport à l'axe horizontal est compris dans la plage de 15 à 75°.

8. Dispositif aérodynamique complémentaire (1) selon la revendication 3, **caractérisé en ce qu'**il comprend: le profil (2) ayant une section transversale en forme de dune (5), dans laquelle la distance horizontale entre le premier point de rupture (K) sur la première surface latérale (10) et la première extrémité de section (6) est comprise dans la plage de 1 à 5 cm, la distance horizontale entre ledit point de rupture (K) et la troisième extrémité de section (8) est comprise dans la plage de 1 à 5 cm, la distance horizontale entre la première extrémité de section (6) et la deuxième extrémité de section (7) est comprise dans la plage de 4 à 20 cm, et la distance verticale entre la base (9) et la troisième extrémité de section (8) est comprise dans la plage de 2 à 8 cm.

9. Dispositif aérodynamique complémentaire (1) selon la revendication 3 ou 8, **caractérisé en ce qu'**il comprend: le profil (2) ayant une section transversale en forme de dune (5), dans laquelle l'angle de la première surface latérale (10) s'étendant à partir de la première extrémité de section (6) par rapport à l'axe horizontal est compris dans la plage de 5 à 35° et l'angle d'une ligne virtuelle tangente au sommet de la courbe concave (I) sur la première surface latérale (10) par rapport à l'axe horizontal est compris dans la plage de 10 à 60°.

10. Dispositif aérodynamique complémentaire (1) selon la revendication 1, **caractérisé en ce qu'**il comprend: le profil (2) qui est réalisé en matière plastique ou composite.
